**Europäisches Patentamt**

**European Patent Office**

**Office européen des brevets**

(19)

(11) Veröffentlichungsnummer : **0 147 658**
**B1**

(12) # EUROPÄISCHE PATENTSCHRIFT

(45) Veröffentlichungstag der Patentschrift :
**01.02.89**

(51) Int. Cl.⁴ : **H 04 L 25/49, H 03 M 13/00**

(21) Anmeldenummer : **84114460.3**

(22) Anmeldetag : **29.11.84**

(54) Anordnung zur verbesserten Paritätszählung.

(30) Priorität : **17.12.83 DE 3345777**

(43) Veröffentlichungstag der Anmeldung :
**10.07.85 Patentblatt 85/28**

(45) Bekanntmachung des Hinweises auf die Patenterteilung : **01.02.89 Patentblatt 89/05**

(84) Benannte Vertragsstaaten :
**AT CH DE FR IT LI NL**

(56) Entgegenhaltungen :
**DE--A-- 2 247 662**
**DE--B-- 3 006 112**
**PATENT ABSTRACTS OF JAPAN, Band 6, Nr. 164 (E-127)[1042], 27. August 1982; & JP-A-57 83 946**

(73) Patentinhaber : **ANT Nachrichtentechnik GmbH**
**Gerberstrasse 33**
**D-7150 Backnang (DE)**

(72) Erfinder : **Ruthemann, Klaus, Dipl.-Ing.**
**Rietenauer Weg 22**
**D-7150 Backnang (DE)**

**Beschreibung**

Die Erfindung betrifft eine Anordnung zur Übertragung von digitalen Signalen, bestehend aus einem Zeichensender und einem Zeichenempfänger, mit einer ersten kontinuierlich Paritätszählung über jeweils n Bits des zu sendenden Zeichenstromes und Einfügung eines von dem jeweiligen Ergebnis dieser ersten Paritätszählung abhängigen Paritätsbit in den zu sendenden Zeichenstrom auf der Sendeseite sowie einer zweiten kontinuierlichen Paritätszählung über die gleichen n Bits des empfangenen Zeichenstromes und Vergleich des Ergebnisses dieser zweiten Paritätszählung mit dem empfangenen Paritätsbit zum Zwecke einer Fehlererkennung auf der Empfangsseite.

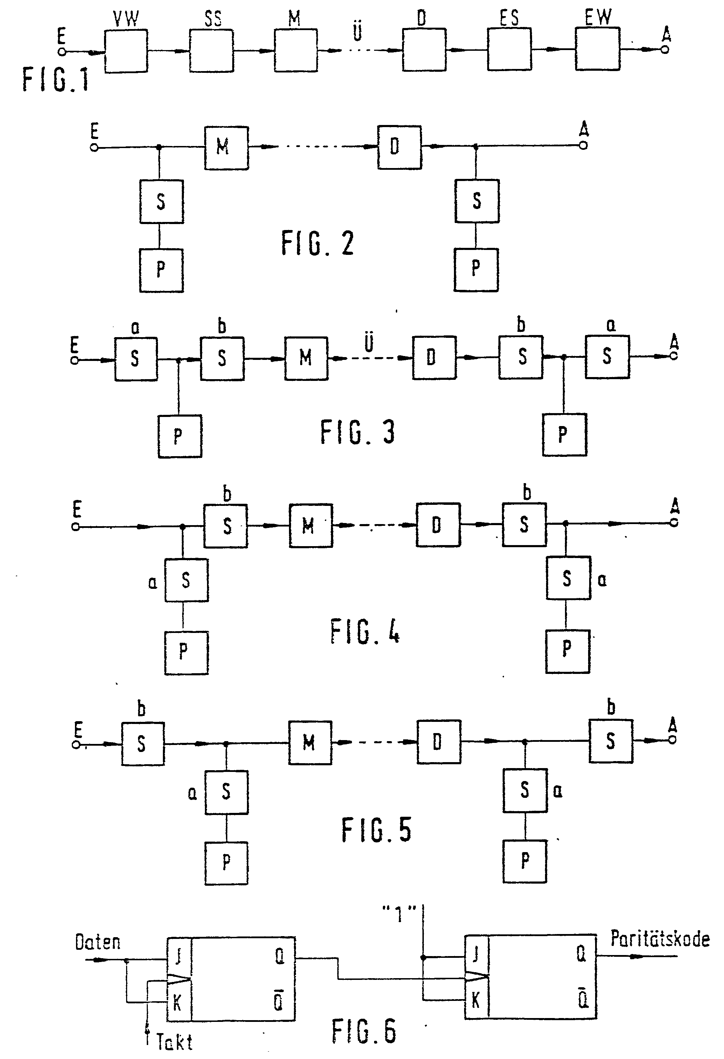

Aus der DE-OS 22 47 662 ist eine Anordnung bekannt, die durch Vertauschen von Verwürfler und Fehlersicherungseinrichtung auf der Sendeseite und Entwürfler und Fehlererkennungseinrichtung auf der Empfangsseite die Fehlersicherheit wesentlich erhöht (Figur 1). Diese Maßnahme wird vorgenommen, um auf der Empfangsseite eine Vervielfachung von Übertragungsfehlern durch den Entwürfler zu vermeiden und Übertragungsfehler vorher zur erkennen und eventuell zu korrigieren.

Der Erfindung liegt die Aufgabe zugrunde, eine Anordnung der eingangs genannten Art anzugeben, bei der der Vorgang der Paritätszählung unabhängig wird sowohl von der Struktur der sendeseitig ankommenden Daten, als auch von der Struktur der über die Übertragungsstrecke gesendeten Daten.

Die Aufgabe wird gelöst wie im Kennzeichen des Anspruchs 1 bzw. 2 beschrieben. Die Unteransprüche geben vorteilhafte Weiterbildungen an.

Im folgenden wird anhand von Ausführungsbeispielen mit Hilfe von Figuren der Erfindungsgegenstand näher beschrieben.

Figur 1 zeigt den Stand der Technik gemäß DE-OS 22 47 662. Figur 2 zeigt eine erfindungsgemäße Anordnung nach Anspruch 1, Figur 3 zeigt eine erfindungsgemäße Anordnung nach Anspruch 3, Figur 4 zeigt eine erfindungsgemäße Anordnung nach Anspruch 4, Figur 5 zeigt eine erfindungsgemäße Anordnung nach Anspruch 5, Figur 6 zeigt eine bekannte Anordnung zur Paritätskontrolle.

Als Vorteil der erfindungsgemäßen Anordnung ergibt sich eine wesentlich verbesserte Genauigkeit der Paritätsauswertung in solchen Übertragungssystemen, bei denen — bedingt durch das verwendete Modulationsverfahren — Übertragungstörungen stets eine Gruppe von n-Bit-Fehlern hervorrufen, wie beispielsweise bei der 4-PSK-Modulation mit differentieller Kodierung. Dabei wird vorausgesetzt, daß im Modem ein Überrahmen auf- bzw. abgebaut wird, wodurch eine Übermittlung des sendeseitig gezählten Paritätskodes erst möglich wird.

Anordnungen zur Paritätszählung in Systemen, die stets Gruppen von n-Bit-Fehlern erzeugen, sind bekannt. Sie unterscheiden sich von Anordnungen, welche bei Abtastfehlern überwiegen 1-Bit-Fehler erzeugen dadurch, daß ihnen ein 1/n-Binäruntersetzer nachgeschaltet ist, dessen Ausgangssignal als Paritätskode verwendet wird. Bekannt sind ebenfalls digitale Übertragungseinrichtungen, bei denen das Datensignal im Datensender und -empfänger jeweils mit einer Quasizufallsfolge verwürfelt wird und bei denen die Paritätszählung, bezogen auf die Verwürfelung mit der Quasizufallsfolge, entweder an der Schittstelle zum Nutz-Datensignal oder an der Schnittstelle zur Übertragungsstrecke stattfindet.

Der Nachteil der bisher üblichen Anordnungen sei beispielsweise anhand von Figur 1 näher erläutert. In dieser Schaltung findet die Paritätszählung unmittelbar vor- bzw. hinter der Modulations- bzw. Demodulationseinrichtung statt. Dabei möge es sich beispielsweise um eine 4-PSK-Modulation handeln.

Die Arbeitsweise des Paritätszählers besteht darin, innerhalb eines festgelegten Intervalls (Rahmen) zu prüfen, ob die Zahl der darin übertragenen Einsen (oder auch Nullen) im Datensignal gerade oder ungerade ist. Dazu verwendet man etwa eine Schaltung gemäß Figur 6. Darin zählt das erst JK-Flipflop die im Datensignal enthaltenen Einsen, indem es bei jeder Eins Kippt, d. h. seinen Ausgangszustand ändert. Das darauf folgende JK-Flipflop ist ein üblicher eins durch zwei-Binärteiler, der hier benötigt wird, um die bei 4-PSK-Verfahren mit differentieller Kodierung stets auftretenden Doppelfehler zu erfassen. Da bei Abtastfehlern in solchen 4-PSK-Demodulatoren immer genau zwei Binärzeichen falsch sind, läßt sich dazu das folgende Fehlerschema angeben :

| | Ausgesendete Binärzeichen | | Verfälschte Binärzeichen | |
|---|---|---|---|---|
| (a) | 0 | 0 | 1 | 1 |
| (b) | 0 | 1 | 1 | 0 |
| (c) | 1 | 0 | 0 | 1 |
| (d) | 1 | 1 | 0 | 0 |

Anhand der Funktionsweise des Paritätszählers (Figur 6) läßt sich erkennen, daß lediglich die Fälle (a) und (d) zu Paritätsverletzungen führen.

Da im Idealfall die Fälle (a) bis (d) alle gleichwahrscheinlich sind, so wird der Quotient aus der Zahl der Binärzeichenfehler und der Zahl der Paritätsverletzungen im Mittel den Wert 4 annehmen.

Die Kenntnis dieser üblicherweise « Verdünnungsfaktor » genannten Größe ermöglicht nun eine Abschätzung der Fehlerrate, mit der sich zum Beispiel die Ersatzchaltung von Übertragungsstrecken steuern läßt.

In der Praxis gilt die zuvor gemachte Annahme der Gleichwahrscheinlichkeit der Fälle (a) bis (d) allerdings nur näherungsweise. Es zeigt sich, daß der oben definierte Quotient um etwa einen Faktor zwei bei technisch realisierten Geräten schwanken kann, in Extremfällen sogar um Größeordnungen. Der Grund liegt darin, daß durch Signalverzerrungen auf dem Übertragungsweg manche der obigen vier Signalmuster (a) bis (d) bevorzugt anfällig für Fehler sind. Es leuchtet ein, daß sich hieraus auch eine Auswirkung auf den Verdünnungsfaktor ergibt.

Die Erfindung löst das Problem dadurch, daß sie die Paritätszählung durch Verwürfelung mit einer geeigneten Quasizufallsfolge sowohl von der Übertragungsstrecke als auch von den Nutzdaten entkoppelt. Eine Entkoppelung von der Übertragungsstrecke allein ist insofern unzureichend, als nun die Paritätszählung abhängig wird von der Struktur der angelieferten Nutzdaten, so daß auch hier Verfälschungen des Verdünnungsfaktors möglich sind. Beispielsweise würde bei einer Modulationseinrichtung, die nach dem 4-PSK-Offset-Verfahren arbeitet, eine solche Anordnung bei einer Nutzdatenfolge 11001100 usw. einen unendlich hohen Verdünnungsfaktor ergeben.

Der Anspruch 6 der Erfindung gibt eine vorteilhafte Ausgestaltung an, indem durch Einsparen eines separaten Quasizufallsfolge-Generators der Mehraufwand einer Anordnung nach Figur 3 bis 5 bezüglich einer bisher bekannten Anordnung nur je eine Stufe zur Modulo-zwei-Addition zweier Datensignale beträgt (Antivalenzgatter).

**Patentansprüche**

1. Anordnung zur Übertragung von digitalen Signalen, bestehend aus einen Zeichensender und einem Zeichenempfänger, mit einer ersten kontinuierlichen Paritätszählung über jeweils n Bits des zu sendenden Zeichenstromes und Einfügung eines von dem jeweiligen Ergebnis dieser ersten Paritätszählung abhängigen Paritätsbit in den zu sendenden Zeichenstrom auf der Sendeseite sowie einer zweiten kontinuierlichen Paritätszählung über die gleichen n Bits des empfangenen Zeichenstromes und Vergleich des Ergebnisses dieser zweiten Paritätszählung mit dem empfangenen Paritätsbit zum Zwecke einer Fehlererkennung auf der Empfangsseite, dadurch gekennzeichnet, daß sowohl auf der Sendeseite als auch auf der Empfangsseite dem Eingang des Paritätszählers (P ; Figur 2) jeweils ein Schrambler (S) vorgeschaltet ist derart, daß der zu sendende Zeichenstorm und der über den Übertragungskanal (Ü) zu übertragende Zeichenstrom statistisch von den Eingangsdaten des Paritätszählers (P) entkoppelt sind.

2. Anordnung zur Übertragung von digitalen Signalen, bestehend aus einem Zeichensender und einem Zeichenempfänger, mit einer ersten kontinuierlichen Paritätszählung über jeweils n Bits des zu sendenden Zeichenstromes und Einfügung eines von dem jeweiligen Ergebnis dieser ersten Paritätszählung abhängigen Paritätsbit in den zu sendenden Zeichenstrom auf der Sendeseite sowie einer zweiten kontinuierlichen Paritätszählung über die gleichen n Bits des empfangenen Zeichenstromes und Vergleich des Ergebnisses dieser zweiten Paritätszählung mit dem empfangenen Paritätsbit zum Zwecke einer Fehlererkennung auf der Empfangsseite, dadurch gekennzeichnet, daß auf der Sendeseite sowohl dem Eingang des Paritätszählers (P, Figur 3, 4 oder 5) als auch dem Übertragungskanal (Ü) jeweils ein Scrambler (S, a bzw. b) vorgeschaltet ist und daß auf der Empfangsseite entsprechend zwei Descrambler (S, b bzw. a) symmetrisch zur sendeseitigen Anordnung in Bezug auf den Übertragungskanal (Ü) angeordnet sind.

3. Anordnung nach Anspruch 2, dadurch gekennzeichnet, daß auf der Sendeseite die Nutzdaten dem ersten Scrambler (s, a Figur 3) zugeführt sind, daß der Ausgang des ersten Scramblers (a) mit dem Eingang des Paritätszählers (P) und dem Eingang des zweiten Scramblers (S, b) verbunden ist und daß der Ausgang des zweiten Scramblers mit dem übertragungskanal (Ü) verbunden ist.

4. Anordnung nach Anspruch 2, dadurch gekennzeichnet, daß die Nutzdaten dem Eingang des ersten Scramblers (S, a ; Figur 4) und dem Eingang des zweiten Scramblers (S, b) zugeführt sind, daß der Ausgang des ersten Scramblers (a) dem Paritätszähler (P) zugeführt ist un daß der Ausgang des zweiten Scramblers (S, b) dem Übertragungskanal (Ü) zugeführt ist.

5. Anordnung nach Anspruch 2, dadurch gekennzeichnet, daß die Nutzdaten dem zweiten Scrambler (b ; Figur 5) zugeführt sind, daß der Ausgang des zweiten Scramblers (b) mit dem Übertragungskanal (Ü) und mit dem Eingang des ersten Scramblers (a) verbunden ist und daß der Ausgang des ersten Scramblers (a) mit dem Paritätszähler (P) verbunden ist.

6. Anordnung nach Anspruch 2, dadurch gekenzeichnet, daß anstelle der vom ersten Scrambler (a) erzeugten Quasizufallsfolge mit Hilfe einer einfachen Anzapfung eine entsprechende Quasizufallsfolge vom zweiten Scrambler (b) abgeleitet wird, die statistisch unabhängig ist von der vom zweiten Scrambler (b) erzeugten Quasizufallsfolge.

**Claims**

1. An apparatus for the transfer of digital signals, comprising a character transmitter and a character

3

receiver, having a first, continuous parity counting operation performed on n bits at a time of the character stream to be transmitted and with insertion of a parity bit, dependent on the particular results of this first parity counting operation, into the character stream to be transmitted on the transmitting side, as well as a second, continuous parity counting operation performed on the same n bits of the character stream to be received and comparison of the result of this second parity counting operation with the received parity bit for the purpose of error recognition on the receiving side, characterized in that on both the transmitting side and the receiving side, the input of the parity counter (P ; Fig. 2) is in each case preceded by a scrambler (S), in such a manner that the character stream to be transmitter and the character stream to be transferred via the transfer channel (Ü) are statistically decoupled from the input data of the parity counter (P).

2. An apparatus for the transfer of digital signals, comprising a character transmitter and a character receiver, having a first, continuous parity counting operation performed on n bits at a time of the character stream to be transmitted and with insertion of a parity bit, dependent on the particular results of this first parity counting operation, into the character stream to be transmitted on the transmitting side, as well as a second, continuous parity counting operation performed on the same n bits of the character stream to be received and comparison of the result of this second parity counting operation with the received parity bit for the purpose of error recognition on the receiving side, characterized in that on the transmission side, both the input of the parity counter (P, Fig. 3, 4 or 5) and the transfer channel (Ü) are each preceded by a respective scrambler (S, a and b, respectively), and that on the receiving side, correspondingly, two descramblers (S, b and a, respectively) are disposed symmetrically with the arrangement on the transmission side, with respect to the transfert channel (Ü).

3. An apparatus as defined by claim 2, characterized in that on the transmitting side, the useful data are delivered to the first scrambler (S, a ; Fig. 3), that the output of the first scrambler (a) is connected to the input of the parity counter (P) and to the input of the second scrambler (S, b), and that the output of the second scrambler is connected to the transfer channel (Ü).

4. An apparatus are defined by claim 2, characterized in that the useful data are delivered to the input of the first scrambler (S, a ; Fig. 4) and to the input of the second scrambler (S, b), that the output of the first scrambler (A) is delivered to the parity counter (P) and the output of the second scrambler (S, b) is delivered to the transfer channel (Ü).

5. An apparatus as defined by claim 2, characterized in that the useful data are delivered to the second scrambler (b ; Fig. 5), that the output of the second scrambler (b) is connected to the transfer channel (Ü) and. to the input of the first scrambler (a), and that the output of the first scrambler (a) is connected to the parity counter (P).

6. An apparatus as defined by claim 2, characterized in that instead of the pseudo-random sequence generated by the first scrambler (a), a simple tap allows a pseudo-random sequence to be derived from the second scrambler (b), which sequence is statistically independent of the pseudo-random sequence generated by the second scrambler (b).

**Revendications**

1. Dispositif pour transmettre des signaux numériques, comprenant un émetteur de caractères et un récepteur de caractères, avec un premier comptage continu de parité portant sur chaque fois n bits de flux de caractères à émettre et insertion d'un bit de parité dépendant du résultat de ce premier comptage dans le flux de caractères à émettre, côté émission, ainsi qu'avec un second comptage continu de parité, portant sur les mêmes n bits du flux de caractères reçu et comparaison du résultat de ce second comptage avec le bit de parité reçu en vue d'une détection d'erreurs côté réception, caractérisé en ce que l'entrée du compteur de parité (P ; figure 2) est précédée d'un brouilleur (S), tant sur le côté émission que sur le côté réception, de telle sorte que le flux de caractères à émettre et le flux de caractères à transmettre par le canal de transmission (Ü) sont statistiquement découplés des données entrantes du compteur de parité (P).

2. Dispositif pour transmettre des signaux numériques, comprenant un émetteur de caractères et un récepteur de caractères, avec un premier comptage continu de parité portant sur chaque fois n bits du flux de caractères à émettre et insertion d'un bit de parité dépendant du résultat de ce premier comptage dans le flux de caractères à émettre, côté émission, ainsi qu'avec un second comptage continu de parité, portant sur les mêmes n bits du flux de caractères reçu et comparaison du résultat de ce second comptage avec le bit de parité reçu en vue d'une détection d'erreurs côté réception, caractérisé en ce que, sur le côté émission, l'entrée du compteur de parité (P ; figures 3, 4 ou 5) et le canal de transmission (Ü) sont précédés chacun d'un brouilleur (S, a ou b) et que, sur le côté réception, deux débrouilleurs (S, b ou a) sont disposés de façon analogue, symétriquement à la disposition côté émission par rapport au canal de transmission (Ü).

3. Dispositif selon la revendication 2, caractérisé en ce que, côté émission, les données utiles sont amenées au premier brouilleur (S, a ; figure 3), que la sortie du premier brouilleur (a) est reliée à l'entrée du compteur de parité (P) et à l'entrée du second brouilleur (S, b) et que la sortie du second brouilleur est reliée au canal de transmission (Ü).

4

4. Dispositif selon la revendication 2, caractérisé en ce que les données utiles sont amenées à l'entrée du premier brouilleur (S, a ; figure 4) et à l'entrée du second brouilleur (S, b), que la sortie du premier brouilleur (a) est connectée au compteur de parité (P) et que la sortie du second brouilleur (S, b) est connectée au canal de transmission (Ü).

5. Dispositif selon la revendication 2, caractérisé en ce que les données utiles sont amenées au second brouilleur (b ; figure 5), que la sortie du second brouilleur (b) est reliée au canal de transmission (Ü) et à l'entrée du premier brouilleur (a) et que la sortie du premier brouilleur (a) est reliée au compteur de parité (P.).

6. Dispositif selon la revendication 2, caractérisé en ce qu'au lieu de la séquence quasi-aléatoire générée par le premier brouilleur (a), une simple sortie permet de dériver du deuxième brouilleur (b) une séquence quasi-aléatoire statistiquement indépendante de la séquence quasi-aléatoire générée par le deuxième brouilleur (b).

FIG.1

FIG. 2

FIG. 3

FIG. 4

FIG.5

FIG.6